# EUROPEAN PATENT APPLICATION

(11) **EP 4 696 397 A1**
(43) Date of publication of application: **18.02.2026**
(21) Application number: 24194286.1
(22) Date of filing: 13.08.2024
(51) Int. Cl.: B01D 53/04, B01D 53/12

(54) **METHOD FOR CAPTURING CARBON DIOXIDE FROM A CARBON DIOXIDE LADEN GAS STREAM**

(71) Applicant: Dharma Karma Foundation, Atherton, CA 94027 (US)
(72) Inventor: FUCHS, Johannes, 3900 Schwarzenau (AT); FAHRNGRUBER, Michael, 3341 Ybbsitz (AT); SCHÖNY, Gerhard, 1230 Wien (AT); FUCHS, Josef, 1140 Wien (AT); WALLMÜLLER, Andreas, 3340 Waidhofen an der Ybbs (AT); CHIMANI, Florian, 4540 Pfarrkirchen (AT); FLEIß, Benjamin, 1060 Wien (AT)
(74) Representative: SONN Patentanwälte GmbH & Co KG

(57) **Abstract**

Method for capturing carbon dioxide from a carbon dioxide laden gas stream (S), comprising at least:
a1) introducing the gas stream (S) into an adsorption device (3) containing an adsorbent (A);
a2) holding the adsorbent (A) in the adsorption device (3), thereby adsorbing carbon dioxide from the gas stream (S) on the adsorbent (A);
b) feeding the adsorbent (A) into a regeneration device (2);
c) separating the carbon dioxide from the adsorbent (A) in the regeneration device (2);
d) removing the separated carbon dioxide;
e) recirculating the regenerated adsorbent (A) into the adsorption device (3);
wherein
b1) batches of the adsorbent (A) loaded with carbon dioxide are sequentially fed into at least two reservoirs (R) of the regeneration device (2);
b2) for each reservoir (R), regeneration of the adsorbent (A) starts in the reservoir (R) that was last filled with adsorbent (A) before feeding a batch of adsorbent (A) into the next reservoir (R) of the sequence;
c1) the reservoir (R) currently containing adsorbent (A) loaded with the least concentration of carbon dioxide is flushed with initial flushing fluid (FI) essentially free of carbon dioxide;
c2) each other reservoir (R) is flushed with pre-used flushing fluid (FP) comprising carbon dioxide, which pre-used flushing fluid (FP) is passed on from the reservoir (R) containing the adsorbent (A) loaded with the next lower concentration of carbon dioxide.

## Description

The invention relates to a method for capturing carbon dioxide from a carbon dioxide laden gas stream, comprising at least the following steps:
a1) introducing the carbon dioxide laden gas stream into at least one container of an adsorption device containing an adsorbent made of solid adsorbent particles for binding the carbon dioxide to the adsorbent and
a2) holding the adsorbent in the container, thereby adsorbing carbon dioxide from the gas stream on the adsorbent contained in the container;
b) feeding the adsorbent loaded with carbon dioxide into a regeneration device,
c) regenerating the adsorbent in the regeneration device by separating the carbon dioxide bound to the adsorbent from the adsorbent;
d) removing both the carbon dioxide separated from the adsorbent and the regenerated adsorbent from the regeneration device;
e) recirculating the regenerated adsorbent into the adsorption device.

The invention also relates to a plant for capturing carbon dioxide from a carbon dioxide laden gas stream, comprising:
an adsorption device with at least one container for containing an adsorbent made of solid adsorbent particles for binding the carbon dioxide to the adsorbent, the adsorption device having an adsorbent inlet and an adsorbent outlet,
a regeneration device for separating the bound carbon dioxide from the adsorbent, connected to the adsorption device.

A system and a method for removing carbon dioxide from an atmosphere is known from EP 3 653 282 A1. As shown in figs. 11a and 11b of EP 3 653 282 A1, particles, preferably of pellet size, flow by gravity into a storage bin. The pellets are coated with a sorbent able to absorb or bind carbon dioxide. The pellets can be selectively fed through a valve structure into an air contacting vessel, and a flow of carbon dioxide laden air is directed through the vessel, so that the sorbent absorbs or binds the carbon dioxide and removes the carbon dioxide from the air. A regeneration bin is provided below the air contacting vessel.

The pellets can be selectively directed into the regeneration bin, where process heat is directed at the pellets, to remove carbon dioxide from the sorbent and regenerate the sorbent. The pellets with the regenerated sorbent are then directed to a vertical lifting structure, from where they are redirected into the storage bin again.

There is however need for more efficient plants and methods.

It is therefore an object of the invention to provide a method and a plant as indicated above, which avoid or at least mitigate the disadvantages of the prior art. In particular the method and the plant shall allow for high efficiency in capturing carbon dioxide, i.e. for removing a high amount of carbon dioxide from the atmosphere in short time, and for low energy demand.

This object is solved by a method according to claim 1 and a plant according to claim 9. Advantageous embodiments and further developments are specified in the dependent claims.

The method according to the invention is characterized in that
the feeding of the adsorbent loaded with carbon dioxide into the regeneration device comprises
b1) sequentially feeding batches of the adsorbent loaded with carbon dioxide into at least two reservoirs of the regeneration device, and
b2) for each reservoir, starting regeneration of the adsorbent in the reservoir that was last filled with adsorbent before feeding a batch of adsorbent into the next reservoir of the sequence, thereby providing the batches of the adsorbent in the reservoirs with different concentrations of carbon dioxide at each point in time;
wherein removing the regenerated adsorbent in step d) comprises sequentially removing the regenerated batches of the adsorbent from one reservoir after the other of the at least two reservoirs;
wherein regenerating the adsorbent in step c) comprises
c1) flushing the reservoir currently containing the adsorbent loaded with the least concentration of carbon dioxide with flushing fluid which is an initial flushing fluid essentially free of carbon dioxide, thereby adding an amount of carbon dioxide to the initial flushing fluid in the reservoir during regeneration, and
c2) flushing each other reservoir containing the adsorbent loaded with more than the least concentration of carbon dioxide with flushing fluid which is a pre-used flushing fluid comprising the initial flushing fluid and the added carbon dioxide, which pre-used flushing fluid is passed on from the reservoir containing the adsorbent loaded with the next lower concentration of carbon dioxide; and
wherein removing the carbon dioxide in step d) comprises
removing carbon dioxide separated from the adsorbent in the reservoir containing the adsorbent loaded with the highest concentration of carbon dioxide and
the carbon dioxide passed on from the other reservoirs into the reservoir containing the adsorbent loaded with the highest concentration of carbon dioxide
from the reservoir containing the adsorbent loaded with the highest concentration of carbon dioxide.

The method is provided for capturing carbon dioxide from a carbon dioxide laden gas stream. The gas stream may be ambient air, an output from an industrial process, an output of a carbon dioxide emitting device or any combination thereof. In particular the method can be used to capture the carbon dioxide emitted from heating, ventilation or air conditioning devices. The method comprises a step a1) according to which the carbon dioxide laden gas stream is introduced into at least one container of an adsorption device. The container contains an adsorbent made of solid adsorbent particles which are able to bind the carbon dioxide to the particles. In a step a2) the adsorbent is held in the container. In particular the adsorbent held in the container may be transported through the container. In addition or alternatively the adsorption device may be a fixed bed adsorber so that the adsorbent held in the container may remain stationary in the container during the period of adsorbing carbon dioxide. On the way through the container or while being held stationary in the container the adsorbent contained in the container adsorbs carbon dioxide from the gas stream and therefore becomes an adsorbent loaded with carbon dioxide. In a step b) the adsorbent loaded with carbon dioxide is fed into a regeneration device. In a step c) the adsorbent in the regeneration device, i.e. the adsorbent which has been fed into the regeneration device in step b), is regenerated by separating the carbon dioxide bound to the adsorbent from the adsorbent. The separation of carbon dioxide from the adsorbent my be supported be applying temperatures higher than ambient temperature to the adsorbent loaded with carbon dioxide. In a step d) both the carbon dioxide separated from the adsorbent and the regenerated adsorbent, i. e. the adsorbent which has been regenerated in step c), is removed from the regeneration device. The removed carbon dioxide may be processed immediately or it may be stored e.g. for further use. In a step e) the regenerated adsorbent is recirculated into the adsorption device for capturing carbon dioxide again.

Please note that reference to the container is to be understood as a reference to the at least one container, if not otherwise mentioned. The one or more container(s) is/are emptied and preferably filled with adsorbent batch-wise. The number of containers may be equal to the number of reservoirs.

In order to increase the efficiency in capturing carbon dioxide from a carbon dioxide laden gas stream, the regeneration device comprises at least two, preferably three or four, reservoirs for receiving the adsorbent loaded with carbon dioxide from the adsorption device. The feeding of the adsorbent loaded with carbon dioxide into the regeneration device comprises a step b1) according to which batches of the adsorbent loaded with carbon dioxide are sequentially fed into at least two reservoirs of the regeneration device, and a step b2) according to which for each reservoir, regeneration of the adsorbent in the reservoir that was last filled with adsorbent starts before feeding a batch of adsorbent into the next reservoir of the sequence. In this way the batches of the adsorbent in the reservoirs comprise different concentrations of carbon dioxide at each point in time. In other words, the reservoirs are filled with adsorbent loaded with carbon dioxide one after the other and regeneration starts in the reservoir that has just been filled with adsorbent before the next reservoir is filled with adsorbent. It is therefore possible to regenerate adsorbent in all of the at least two reservoirs of the regeneration device simultaneously. Furthermore comparing the process of regeneration in the at least two reservoirs, the process has progressed differently in the reservoirs at each point in time. Consequently, removing the regenerated adsorbent in step d) comprises sequentially removing the regenerated batches of the adsorbent from one reservoir after the other of the at least two reservoirs. Since the at least two reservoirs of the regeneration device are filled and emptied in sequence, each reservoir can be designed with smaller dimensions compared to a single reservoir which otherwise needs to receive all the loaded adsorbent. Furthermore compared to a single reservoir the at least two reservoirs allow for a more continuous loading an unloading of the regeneration device and of the container of the adsorption device. Therefore also the adsorption of carbon dioxide by the adsorption device takes place in a more efficient way, as adsorbent is fed to and removed from the container of the adsorption device in a more continuous way.

Furthermore the efficiency in capturing carbon dioxide from a carbon dioxide laden gas stream is increased in that regenerating the adsorbent in step c) comprises a step c1) according to which the reservoir currently containing the adsorbent loaded with the least concentration of carbon dioxide is flushed with flushing fluid which is an initial flushing fluid essentially free of carbon dioxide, thereby adding an amount of carbon dioxide to the initial flushing fluid in the reservoir during regeneration, and a step c2) according to which each other reservoir containing the adsorbent loaded with more than the least concentration of carbon dioxide is flushed with flushing fluid which is a pre-used flushing fluid comprising the initial flushing fluid and the added carbon dioxide, which pre-used flushing fluid is passed on from the reservoir containing the adsorbent loaded with the next lower concentration of carbon dioxide. The reservoirs are fluidly connected to each other and the flushing fluid is transported through all reservoirs in a flow direction, i.e. the direction of flow of the flushing fluid. In other words, the pre-used flushing fluid leaving a particular reservoir enters the next reservoir in the sequence of reservoirs. The sequence of reservoirs is therefore defined by the flow direction of the flushing fluid. Steps c1) and c2) represent a counterflow principle, because the higher the concentration of carbon dioxide adsorbed by the adsorbent in a particular reservoir, the higher the concentration of carbon dioxide and consequently the lower the concentration of other components than carbon dioxide in the flushing fluid used to flush the particular reservoir. Even a pre-used flushing fluid with high concentration of carbon dioxide will separate carbon dioxide efficiently, if this pre-used flushing fluid is fed through a reservoir which contains an adsorbent with a high concentration of carbon dioxide. It shall be noted that flushing the reservoir with flushing fluid may include condensation of the flushing fluid on the adsorbent, in order to provide heat to the adsorbent.

The efficiency in capturing carbon dioxide from a carbon dioxide laden gas stream is furthermore increased in that removing the carbon dioxide in step d) comprises removing carbon dioxide separated from the adsorbent in the reservoir containing the adsorbent loaded with the highest concentration of carbon dioxide and the carbon dioxide passed on from the other reservoirs into the reservoir containing the adsorbent loaded with the highest concentration of carbon dioxide from the reservoir containing the adsorbent loaded with the highest concentration of carbon dioxide.

The method according to the invention therefore allows for simultaneous regeneration of adsorbent in different reservoirs, wherein the progress of regeneration differs among the reservoirs. During regeneration the flushing fluid which is used to regenerate the reservoirs is transported through all reservoirs, which are fluidly connected, whereby carbon dioxide is added to the initial flushing fluid thereby creating pre-used flushing fluid. With the exception of the reservoir comprising the adsorbent with the highest load of carbon dioxide, the pre-used flushing fluid leaving the reservoirs, is not removed from the regeneration device but is reused for regenerating the adsorbent in the other reservoirs. Thereby the required amount of initial flushing fluid essentially free of carbon dioxide can be reduced compared to methods and systems which add initial flushing fluid essentially free of carbon dioxide to every reservoir. If the flushing fluid, i.e. the initial flushing fluid and/or the pre-used flushing fluid, comprises a temperature higher than ambient temperature, the pre-used flushing fluid leaving a particular reservoir can also be used to heat, at least in part, the adsorbent in the next reservoir in the sequence of reservoirs flushed in flow direction of the flushing fluid.

In this description the term flushing fluid is used as a generic term for the initial flushing fluid and the pre-used flushing fluid.

When reference is made in this description to location and directional indications such as upper, lower, above or below, these indications are to be understood in relation to a position of use of the plant. In particular, the term "below" refers to a view in the direction of gravity.

A preferred embodiment of the method is characterized in that at least for a time period required for feeding batches of the adsorbent into the same reservoir at least three times, the batches of the adsorbent are fed into the reservoirs in step b1) in sequence and separated by a first time interval, which is constant, in particular which is defined as the time between consecutive feeding of two batches into the same reservoir divided by the number of reservoirs. By loading the reservoirs with batches of the adsorbent in equal first time intervals also the progress of regeneration in the different reservoirs can be evenly distributed. In addition, the adsorbent loaded with carbon dioxide can be removed from the container of the adsorption device at equal first time intervals, which is beneficial for the throughput of adsorbent through the container and for efficient binding of carbon dioxide to the adsorbent.

It is furthermore preferred that at least for a time period required for removing the regenerated batches of the adsorbent from the same reservoir at least three times, the regenerated batches of the adsorbent are removed from the reservoirs in sequence and separated by the first time interval, which is constant, in particular which is defined as the time between consecutive feeding of two batches into the same reservoir divided by the number of reservoirs. By this, the regenerated adsorbent can be recirculated into the container of the adsorption device in equal first time intervals, which is beneficial for the throughput of adsorbent through the container and for efficient binding of carbon dioxide to the adsorbent. When the reservoirs are both loaded with the batches of the adsorbent in the equal first time intervals and unloaded in the equal first time intervals, the duration for regeneration in the different reservoirs can be the same and regeneration can be performed particularly efficiently.

It can also be provided that all reservoirs are flushed with the flushing fluid for the same duration of time. This allows for avoiding delays in regenerating the adsorbent in other reservoirs than a specific reservoir, which delays could be induced by waiting for specific regeneration conditions to be achieved within the specific reservoir.

Preferably the batches of the adsorbent loaded with carbon dioxide are heated within the reservoirs, in particular by the flushing fluid. Heating the batches within the reservoirs can be performed particularly efficiently. It is particularly beneficial if the flushing fluid is fed to the reservoirs with suitable high temperature. The initial flushing fluid essentially free of carbon dioxide, for flushing the reservoir currently containing the adsorbent loaded with the least concentration of carbon dioxide, may be heated by a heating device before it its fed into the reservoir, which heating device may be arranged separate to the reservoirs. Furthermore the reservoirs may comprise a heating apparatus. In addition the flushing fluid may condense on the adsorbent in order to transfer a high amount of heat in short time.

It is particularly preferable that the flushing fluid has a temperature of 60 to 120 Celsius degree. This temperature range allows for efficient regeneration of the adsorbent.

It is furthermore preferred that the initial flushing fluid is steam or a purging gas. For instance the steam or the purging gas may comprise a portion of water.

It can also be provided that in at least one reservoir the concentration of separated carbon dioxide is measured and the reservoir is flushed until the concentration of separated carbon dioxide reaches a defined value. This allows for achieving a defined level of regeneration in the at least one reservoir, preferably in all reservoirs.

The plant according to the invention is characterized by
the regeneration device comprising at least two reservoirs connected to each other, each reservoir having an adsorbent intake, an adsorbent outtake, a fluid intake, a fluid outtake, and is connected to a first intake valve, a first outtake valve, a second intake valve, a second outtake valve and a third intake valve; wherein
the adsorbent outlet of the adsorption device is connected to the adsorbent intake of each reservoir via the first intake valve assigned to each reservoir,
the adsorbent outtake of each reservoir is connected to the adsorbent inlet of the adsorption device via the first outtake valve assigned to each reservoir,
the fluid intake of each reservoir is connected to a source of initial flushing fluid essentially free of carbon dioxide via the second intake valve assigned to each reservoir, and the fluid intake is furthermore connected to the fluid outtake of a respective downstream reservoir via the third intake valve assigned to each reservoir,
the fluid outtake of each reservoir is connected to a target for carbon dioxide via the second outtake valve assigned to each reservoir, wherein a vacuum generation unit configured to generate a vacuum inside each reservoir is arranged between the second outtake valves and the target for carbon dioxide, and furthermore the fluid outtake of each reservoir is connected to the fluid intake of a respective upstream reservoir via the third intake valve assigned to each reservoir, and
a controller connected to and at least configured to open and close the first intake valves, the first outtake valves, the second intake valves, the second outtake valves and the third intake valves.

The plant is used to capture carbon dioxide from a carbon dioxide laden gas stream. With regard to the description of the plant, reference is also made to the preceding description of the method, insofar as this description of the method is applicable in terms of meaning to the plant. Likewise, in connection with the description of the method, reference is made to the following description of the plant.

The plant comprises an adsorption device for adsorbing carbon dioxide from a carbon dioxide laden gas stream. The adsorption device comprises at least one container for containing an adsorbent. The adsorbent is made of solid adsorbent particles for binding the carbon dioxide to the adsorbent. The adsorption device has an adsorbent inlet through which adsorbent ready for binding carbon dioxide can be added to the container and an adsorbent outlet through which adsorbent loaded with carbon dioxide can be removed from the container. The plant also comprises a regeneration device for receiving the adsorbent loaded with carbon dioxide from the adsorption device and for separating the bound carbon dioxide from the adsorbent, whereby the adsorbent is regenerated. The regeneration device is connected to the adsorption device. According to the invention the regeneration device comprises at least two reservoirs which are connected to each other. Each reservoir has an adsorbent intake through which adsorbent from the adsorption device can be received, an adsorbent outtake through which regenerated adsorbent can be removed from the reservoir, a fluid intake through which a flushing fluid used for regenerating the adsorbent can be received and a fluid outtake through which flushing fluid which has regenerated the adsorbent can be removed. Each reservoir is connected to a first intake valve, a first outtake valve, a second intake valve, a second outtake valve and a third intake valve. This means that each reservoir is connected to a different one of N first intake valves, to a different one of N first outtake valves, to a different one of N second intake valves, to a different one of N second outtake valves and to a different one of N third intake valves, wherein N is the number of reservoirs. Said valves are constructed to be opened and closed.

The adsorbent outlet of the adsorption device is connected to the adsorbent intake of each reservoir via the first intake valve which is assigned to each reservoir and which is arranged in the flow path between the adsorbent outlet and the adsorbent intake. By opening the first intake valve adsorbent can be transported into the reservoir. The adsorbent outtake of each reservoir is connected to the adsorbent inlet of the adsorption device via the first outtake valve which is assigned to each reservoir and which is arranged in the flow path between the adsorbent outtake and the adsorbent inlet. By opening the first outtake valve adsorbent can be recirculated into the container of the adsorption device.

The fluid intake of each reservoir is connected to a source of initial flushing fluid essentially free of carbon dioxide via the second intake valve which is assigned to each reservoir and which is arranged in the flow path between the fluid intake and the source of initial flushing fluid. By opening the second intake valve the initial flushing fluid can be introduced into the reservoir. The fluid intake of each reservoir is furthermore connected to the fluid outtake of a respective downstream reservoir via the third intake valve which assigned to each reservoir and which is arranged in the flow path between fluid intake and the fluid outtake of the respective downstream reservoir. By opening the third intake valve pre-used flushing fluid can be introduced into the reservoir.

The fluid outtake of each reservoir is connected to a target for carbon dioxide via the second outtake valve which is assigned to each reservoir and which is arranged in the flow path between the fluid outtake and the target for carbon dioxide. By opening the second outtake valve the pre-used flushing fluid which has flown through all reservoirs can be removed from the most downstream reservoir. A vacuum generation unit configured to generate a vacuum inside each reservoir is arranged between the second outtake valves and the target for carbon dioxide. The vacuum generated by the vacuum generation unit assists in regenerating the adsorbent. Furthermore the fluid outtake of each reservoir is connected to the fluid intake of a respective upstream reservoir via the third intake valve which is assigned to each reservoir and which is arranged in the flow path between the fluid outtake and the fluid intake of the respective upstream reservoir. By opening the third intake valve the pre-used flushing fluid which has flown through the downstream reservoirs can be introduced into the reservoir.

The plant furthermore comprises a controller which is connected to the first intake valves, the first outtake valves, the second intake valves, the second outtake valves and the third intake valves. The controller is at least configured to open and close the first intake valves, the first outtake valves, the second intake valves, the second outtake valves and the third intake valves. By opening and closing the valves the controller controls the flow of the adsorbent between the adsorption device and the regeneration device, in both directions, and controls the flow of the flushing fluid containing the different concentrations of carbon dioxide, including the case of no carbon dioxide, through the regeneration device.

According to a preferred embodiment of the plant the initial flushing fluid is steam or a purging gas. In particular the flushing fluid, i.e. the initial flushing fluid and/or the pre-used flushing fluid, may comprise a temperature of between 60 and 120 Celsius degree.

Preferably the absolute pressure in the reservoirs comprises between 0,15 - 0,8 bara. This pressure below atmospheric pressure, generated by the vacuum generation unit, assists in regenerating the adsorbent in the regeneration device.

The invention is further explained below with reference to the drawings by way of preferred, non-limiting embodiments.
Fig. 1 shows a schematic representation of the counterflow principle realized in the method according to the invention, in an example with three reservoirs;
Fig. 2 shows a symbolic representation of an exemplary plant according to the invention, for the sake of clarity without illustrating the controller;
Fig. 3 shows the plant of fig. 2 with the controller;
Fig. 4 shows a time diagram illustrating the sequence of opening and closing the valves of the plant shown in fig. 2; and
Fig. 5 to 24 show individual states of the plant shown in fig. 2, when performing the method.

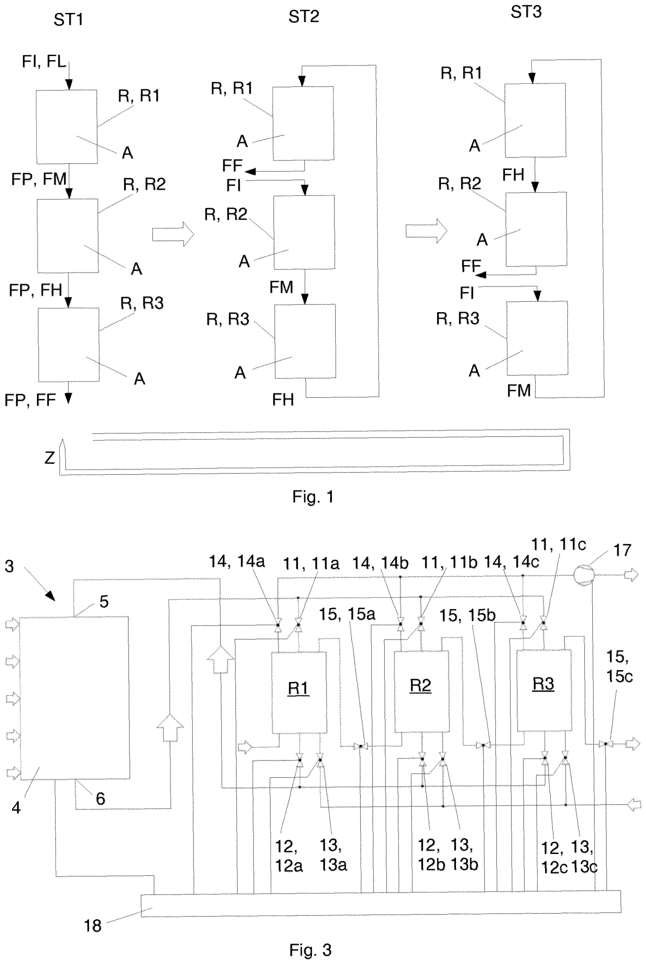

Fig. 1 shows a simplified schematic representation of three reservoirs R of a regeneration device 2, in three different stages ST, i.e. at three different points in time. The regeneration device 2 is part of a plant 1 for capturing carbon dioxide from a carbon dioxide laden gas stream S. The connection between the reservoirs R is represented by arrows. It shall be noted that the number of reservoirs R in the regeneration device 2 is not limited to three. Instead the regeneration device 2 can also comprise only two or more than three, in particular four or five reservoirs R. In general, within one regeneration cycle Z, shown in Fig. 1, one reservoir R is filled with adsorbent A, recycled, emptied and about to be filled with adsorbent A again.

Fig. 1 exemplarily illustrates the counterflow principle applied to the reservoirs R and the flushing fluid F. The counterflow principle is based on the fact that the reservoir R currently containing the adsorbent A loaded with the least concentration of carbon dioxide is flushed with initial flushing fluid FI essentially free of carbon dioxide. Thereby an amount of carbon dioxide is added to the initial flushing fluid FI in the reservoir during regeneration and the initial flushing fluid FI becomes a pre-used flushing fluid F. In contrast the reservoir R currently containing the adsorbent A loaded with the highest concentration of carbon dioxide is flushed with pre-used flushing fluid FP essentially comprising a high concentration of carbon dioxide. A pre-used flushing fluid FP with high concentration of carbon dioxide still allows for separating carbon dioxide from the adsorbent A if the adsorbent A comprises a high concentration of carbon dioxide as well. In general, each reservoir R containing the adsorbent A loaded with more than the least concentration of carbon dioxide is flushed with a pre-used flushing fluid comprising the initial flushing fluid FI and the added carbon dioxide, which pre-used flushing fluid FP is passed on from the reservoir R containing the adsorbent A loaded with the next lower concentration of carbon dioxide.

In a first stage ST1 shown in Fig. 1 the adsorbent A in a first reservoir R1 is almost completely recycled and first reservoir R1 is short before to be emptied. First reservoir R1 is therefore the reservoir R currently containing the adsorbent A loaded with the least concentration of carbon dioxide. In order to still separate remaining amounts of carbon dioxide from the almost recycled adsorbent A, first reservoir R1 is fed with initial flushing fluid FI essentially free of carbon dioxide, which is the flushing fluid FL with the lowest amount of carbon dioxide in the regeneration device 2, since the less the concentration of carbon dioxide in the flushing fluid F the better carbon dioxide can be separated from the adsorbent A. On its way through the first reservoir R1 the initial flushing fluid FI captures carbon dioxide. In general, in each reservoir R an amount of carbon dioxide is added to the flushing fluid F flushing the reservoir R during regeneration. In general the flushing fluid F leaving a reservoir R is designated a pre-used flushing fluid FP. A pre-used flushing fluid FP comprising a medium concentration of carbon dioxide is designated a medium loaded flushing fluid FM and a pre-used flushing fluid FP comprising a high concentration of carbon dioxide is designated a high loaded flushing fluid FH. The pre-used flushing fluid FP leaving the regeneration device 2 is designated a final loaded flushing fluid FF.

In this first stage ST1 the adsorbent A in the second reservoir R2 is approximately half recycled and second reservoir R2 is fed with the pre-used flushing fluid FP, FM which has left first reservoir R1 and which comprises a higher concentration of carbon dioxide than the initial flushing fluid FI, FL at the entry of first reservoir R1. Furthermore in this first stage ST1 the adsorbent A in the third reservoir R3 has nearly not yet been recycled and third reservoir R3 is fed with the pre-used flushing fluid FP, FH which has left second reservoir R2 and which comprises a higher concentration of carbon dioxide than the pre-used flushing fluid FP, FM at the entry of second reservoir R1. After the pre-used flushing fluid FP, FH has passed through the third reservoir R3, the final loaded flushing fluid FF with the final concentration of carbon dioxide leaves the regeneration device 2.

In a second stage ST2 shown in fig. 1 the first reservoir R1 is filled with a new batch of adsorbent A which comprises the highest concentration of carbon dioxide among all reservoirs R in this stage ST2. Since the adsorbent A comprises the highest concentration of carbon dioxide the first reservoir R1 is fed with high loaded flushing fluid FH comprising high concentration of carbon dioxide which leaves the third reservoir R3. The adsorbent A in the second reservoir R2 is almost completely recycled and second reservoir R2 is short before to be emptied. Second reservoir R2 is therefore the reservoir R currently containing the adsorbent A loaded with the least concentration of carbon dioxide. Second reservoir R2 is fed with initial flushing fluid FI essentially free of carbon dioxide. Furthermore, in this second stage ST2 the adsorbent A in the third reservoir R3 is approximately half recycled and third reservoir R3 is fed with the medium loaded flushing fluid FM which has left second reservoir R2 and which comprises a higher concentration of carbon dioxide than the initial flushing fluid FI at the entry of second reservoir R2.

In a third stage ST3 shown in fig. 1 the adsorbent A in the first reservoir R1 is approximately half recycled and first reservoir R1 is fed with the medium loaded flushing fluid FM which has left third reservoir R3 and which comprises a higher concentration of carbon dioxide than the initial flushing fluid FI at the entry of third reservoir R3. The second reservoir R2 is filled with a new batch of adsorbent A which comprises the highest concentration of carbon dioxide among all reservoirs R in this stage ST3. The second reservoir R2 is fed with high loaded flushing fluid FH comprising high concentration of carbon dioxide which leaves the first reservoir R1. The adsorbent A in the third reservoir R3 is almost completely recycled and third reservoir R3 is short before to be emptied. Third reservoir R3 is therefore the reservoir R currently containing the adsorbent A loaded with the least concentration of carbon dioxide. Third reservoir R3 is fed with initial flushing fluid FI essentially free of carbon dioxide.

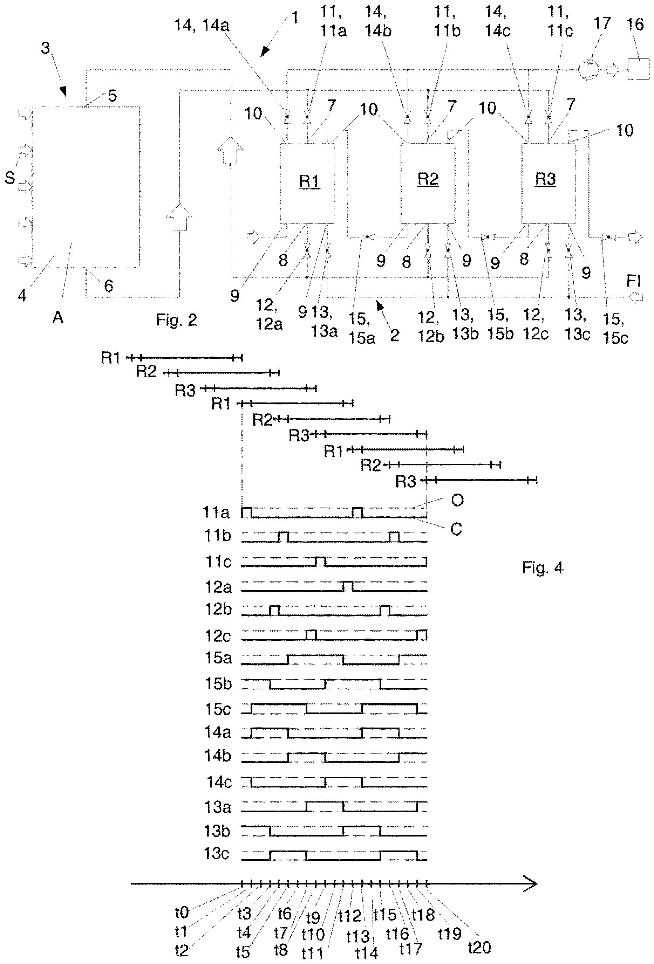

Fig. 2 shows a symbolic representation of an exemplary plant 1 according to the invention, for capturing carbon dioxide from a carbon dioxide laden gas stream S. For the sake of clarity the controller is not shown in fig. 2. The plant 1 comprises an adsorption device 3 with a single container 4 for containing an adsorbent A made of solid adsorbent particles for binding the carbon dioxide to the adsorbent A. Instead of a single container 4 more than one container 4 can be provided. The adsorption device 3 has an adsorbent inlet 5 and an adsorbent outlet 6. The plant 1 furthermore comprises the regeneration device 2 for separating the bound carbon dioxide from the adsorbent A. The regeneration device 2 is connected to the adsorption device 3. The adsorption device 3 can be operated continuously, in which case the adsorbent A is transported continuously through the container 4, or the adsorption device 3 can be a fluid bed adsorber. Even if the adsorption device 3 is operated continuously batches of adsorbent A are added to and removed from the adsorption device 3, e.g. by providing buffers for transferring the operation between continuous operation and batch-wise operation.

The regeneration device 2 comprises at least two reservoirs R connected to each other. In the example shown the regeneration device 2 comprises three reservoirs R. Each reservoir R has an adsorbent intake 7, an adsorbent outtake 8, a fluid intake 9 and a fluid outtake 10. Each reservoir R is connected to a first intake valve 11, a first outtake valve 12, a second intake valve 13, a second outtake valve 14 and a third intake valve 15. The adsorbent outlet 6 of the adsorption device 3 is connected to the adsorbent intake 7 of each reservoir R via the first intake valve 11 assigned to each reservoir R. The adsorbent outtake 8 of each reservoir R is connected to the adsorbent inlet 5 of the adsorption device 3 via the first outtake valve 12 assigned to each reservoir R. As can be seen in fig. 2 the fluid intake 9 of each reservoir R is connected to a source of initial flushing fluid FI essentially free of carbon dioxide via the second intake valve 13 assigned to each reservoir R. Furthermore the fluid intake 9 is connected to the fluid outtake 10 of a respective downstream reservoir R via the third intake valve 15 assigned to each reservoir R. In fig. 2 the fluid intake 9 of each reservoir R is illustrated exemplarily having two ports. In a different embodiment the fluid intake 9 of each reservoir R can be realized by a single intake port at each reservoir R. Fig. 2 also shows that the fluid outtake 10 of each reservoir R is connected to a target 16 for carbon dioxide via the second outtake valve 14 assigned to each reservoir R. A vacuum generation unit 17 configured to generate a vacuum inside each reservoir R is arranged between the second outtake valves 14 and the target 16 for carbon dioxide. The target 16 for carbon dioxide can be any target suitable to accommodate the carbon dioxide separated from the adsorbent A in the reservoirs R. In particular the target 16 can be a vessel or a geological structure in the soil. In the scope of the invention the target 16 could also be the atmosphere, although this is not a preferred target 16. Furthermore the fluid outtake 10 of each reservoir R is connected to the fluid intake 9 of a respective upstream reservoir R via the third intake valve 15 assigned to each reservoir R. In fig. 2 the fluid outtake 10 of each reservoir R is illustrated exemplarily having two ports. In a different embodiment the fluid outtake 10 of each reservoir R can be realized by a single outtake port at each reservoir R.

Since the reservoirs R are connected to each other in such a way that the flushing fluid F can flow in sequence through all reservoirs R, the reservoir R receiving the initial flushing fluid FI which is essentially free of carbon dioxide or at least which has the lowest amount of carbon dioxide is the most downstream reservoir R in the sequence of reservoirs R. The other reservoirs R are arranged upstream of the most downstream reservoir R. As the process or regeneration is different within the different reservoirs R, the reservoirs R alternately are the most downstream reservoir R.

Fig. 3 shows the plant 1 with the controller 18. The controller 18 is connected to the first intake valves 11, the first outtake valves 12, the second intake valves 13, the second outtake valves 14 and the third intake valves 15. Furthermore the controller 18 is at least configured to open and close the first intake valves 11, the first outtake valves 12, the second intake valves 13, the second outtake valves 14 and the third intake valves 15. The controller 18 may also be connected to the adsorption device 3 in order to control operation of the adsorption device 3 and the controller 18 may be connected to the vacuum generation unit 17 in order to control operation of the vacuum generation unit 17. In particular the controller 18 may be designed to control operation of all components of the plant 1, in order to enable the method according to the invention to be carried out by the plant 1.

Fig. 4 shows a time diagram illustrating the sequence of opening and closing the first intake valves 11, 11a, 1b, 11c, first outtake valves 12, 12a, 12b, 12c, second intake valves 13, 13a, 13b, 13c, second outtake valves 14, 14a, 14b, 14c and third intake valves 15, 15a, 15b, 15c of the plant 1. All valves 11, 12, 13, 14, 15 are illustrated in their open state O and their closed state C.

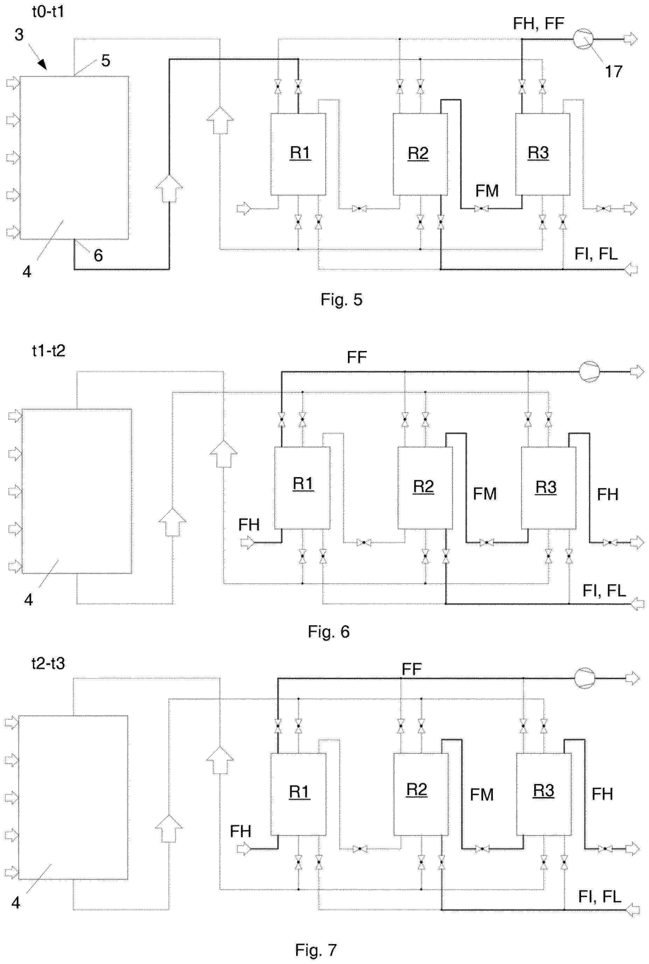

Fig. 5 to 24 show individual states of the plant 1 when performing the method described above, wherein each stage corresponds to an individual time interval t0-t1 to t19-t20, see also fig. 4. The open paths are represented by thicker lines. In Fig. 5 to 24 the target 16 and the controller 18 are not illustrated.

In Fig. 5 representing time interval t0-t1, reservoir R1 is being filled with a batch of adsorbent A from the adsorption device 3. Reservoir R2 contains the adsorbent A loaded with the least concentration of carbon dioxide and is being flushed with initial flushing fluid FI essentially free of carbon dioxide. Reservoir R3 contains the adsorbent A loaded with more than the least concentration of carbon dioxide, in particular with the highest concentration of carbon dioxide, and is being flushed with pre-used flushing fluid FP, in particular medium loaded flushing fluid FM, which is a mixture of the initial flushing fluid FI and carbon dioxide from reservoir R2. The medium loaded flushing fluid FM is passed on from the reservoir R2 containing the adsorbent A loaded with the next lower concentration of carbon dioxide. Furthermore the carbon dioxide passed on from the other reservoirs R, in fig. 5 reservoir R2, and the carbon dioxide separated from the adsorbent A in the reservoir R3 containing the adsorbent A loaded with the highest concentration of carbon dioxide is removed from the reservoir R3. The open and closed states of the valves 11, 12, 13, 14, 15 can be seen in fig. 4.

In Fig. 6 representing time interval t1-t2, reservoir R1 contains the adsorbent A loaded with the highest concentration of carbon dioxide. Reservoir R2 containing the adsorbent with the lowest load of carbon dioxide is being flushed with initial flushing fluid FI essentially free of carbon dioxide. Thereby carbon dioxide is separated from the adsorbent A in reservoir R2. The mixture of carbon dioxide separated in reservoir R2 and of the initial flushing fluid FI is being fed as medium loaded flushing fluid FM into reservoir R3. Reservoir R3 containing the adsorbent A with the second lowest load of carbon dioxide is being flushed with the medium loaded flushing fluid FM comprising carbon dioxide. Thereby carbon dioxide is separated from the adsorbent A in reservoir R3. The mixture of carbon dioxide separated in reservoir R3 and of the medium loaded flushing fluid FM is being fed as high loaded flushing fluid FH into reservoir R1. Thereby carbon dioxide is separated from the adsorbent A in reservoir R1. The mixture of carbon dioxide separated in reservoir R1 and of the high loaded flushing fluid FH is being fed as final flushing fluid FF via the vacuum generation unit 17 into the target 16.

In Fig. 7 representing time interval t2-t3, the processing as shown in Fig. 6 is going on.

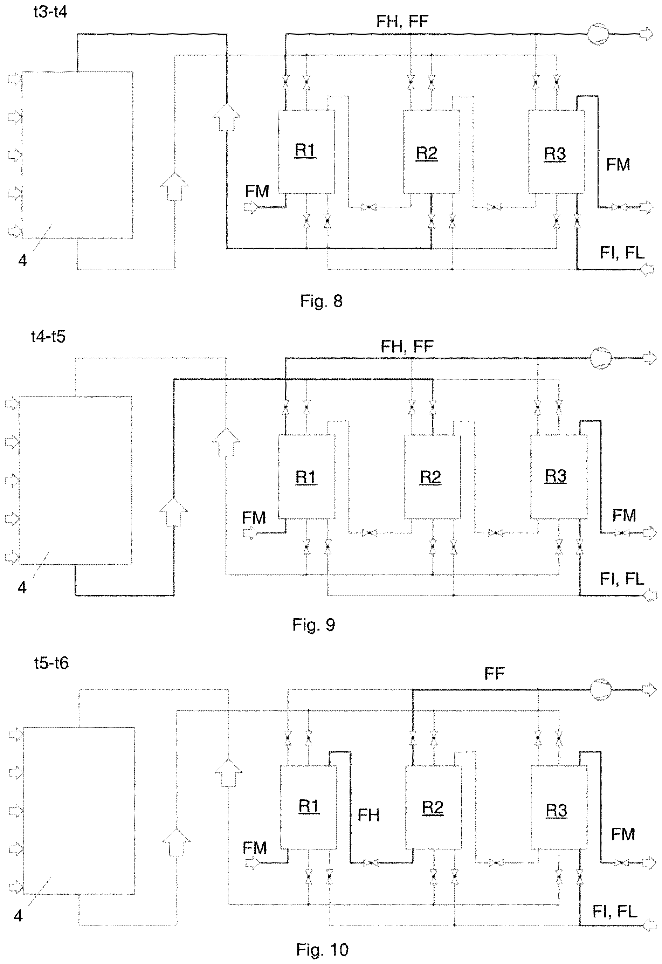

In Fig. 8 representing time interval t3-t4, the adsorbent A in reservoir R2 has been regenerated and this adsorbent A is being fed back, i.e. recirculated, into the adsorption device 3. Therefore in this time interval reservoir R3 contains the adsorbent A with the lowest load of carbon dioxide, which is why reservoir R3 is being flushed with initial flushing fluid FI. The medium loaded flushing fluid FM (i.e. the flushing fluid F loaded with a medium amount of carbon dioxide) leaving reservoir R3 is being fed into reservoir R1. The high loaded flushing fluid FH leaving reservoir R1, which in this case is also the final flushing fluid FF, is being transported into the target 16.

In Fig. 9 representing time interval t4-t5, reservoir R2 is being filled with a batch of adsorbent A. Reservoir R3 still containing the adsorbent A with the lowest load of carbon dioxide is being flushed with initial flushing fluid FI. Reservoir R1 is being flushed with the medium loaded flushing fluid FM leaving reservoir R3 and the final flushing fluid FF is being removed from reservoir R1.

In Fig. 10 representing time interval t5-t6, reservoir R3 still is being flushed with the initial flushing fluid FI. Reservoir R1 containing the adsorbent A with medium load of carbon dioxide is being flushed with the medium loaded flushing fluid FM leaving reservoir R1. Reservoir R2 containing the adsorbent A with the highest load of carbon dioxide is being flushed with the high loaded flushing fluid FH leaving reservoir R1. The final flushing fluid FF is being removed from reservoir R2.

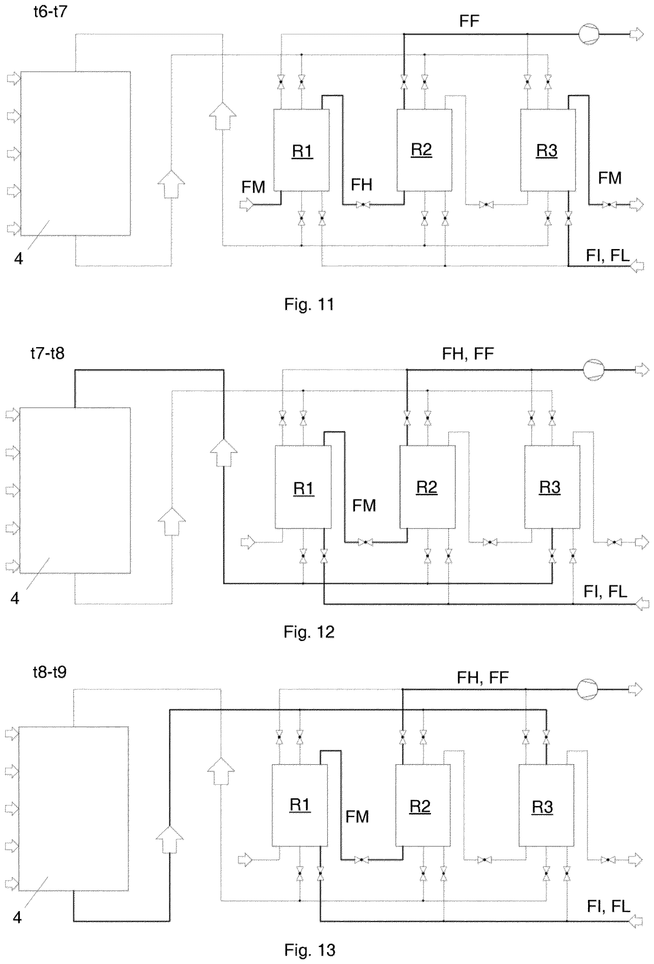

In Fig. 11 representing time interval t6-t7, the processing as shown in Fig. 10 is going on.

In Fig. 12 representing time interval t7-t8, the adsorbent A in reservoir R3 has been regenerated and this adsorbent A is being fed back into the adsorption device 3. Therefore in this time interval reservoir R1 contains the adsorbent A with the lowest load of carbon dioxide. Reservoir R1 is being flushed with initial flushing fluid FI. The medium loaded flushing fluid FM leaving reservoir R1 is being fed into reservoir R2. The high loaded flushing fluid FH leaving reservoir R2, which in this case is also the final flushing fluid FF, is being transported into the target 16.

In Fig. 13 representing time interval t8-t9, reservoir R3 is being filled with a batch of adsorbent A. Reservoir R1 still containing the adsorbent A with the lowest load of carbon dioxide is being flushed with initial flushing fluid FI. Reservoir R2 is being flushed with the medium loaded flushing fluid FM leaving reservoir R1 and the final flushing fluid FF is being removed from reservoir R2.

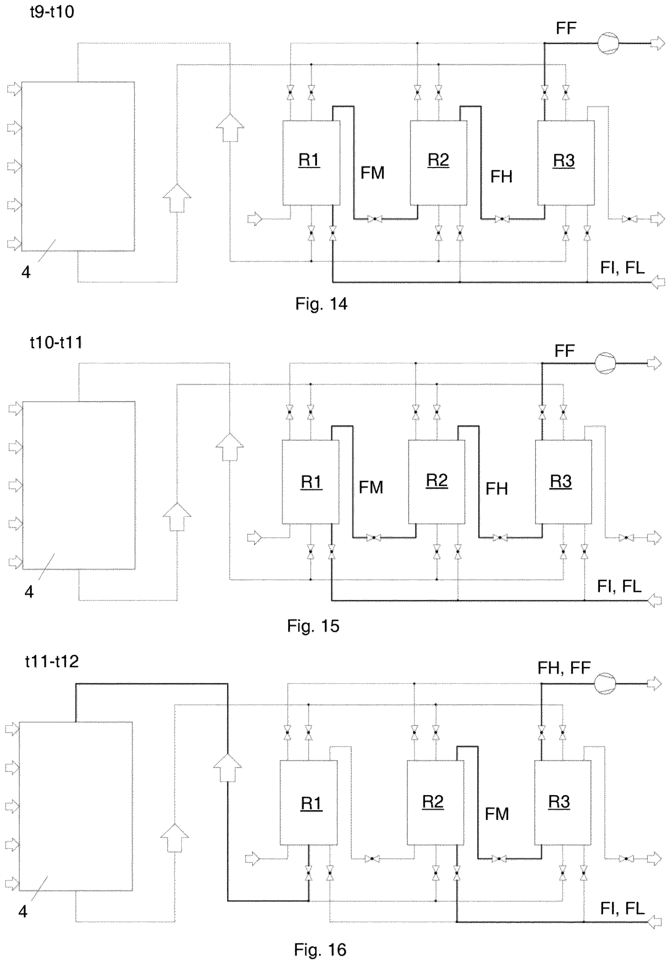

In Fig. 14 representing time interval t9-t10, reservoir R1 still is being flushed with the initial flushing fluid FI. Reservoir R2 containing the adsorbent A with medium load of carbon dioxide is being flushed with the medium loaded flushing fluid FM leaving reservoir R1. Reservoir R3 containing the adsorbent A with the highest load of carbon dioxide is being flushed with the high loaded flushing fluid FH leaving reservoir R2. The final flushing fluid FF is being removed from reservoir R3.

In Fig. 15 representing time interval t10-t11, the processing as shown in Fig. 14 is going on.

In Fig. 16 representing time interval t11-t12, the adsorbent A in reservoir R1 has been regenerated and this adsorbent A is being fed back into the adsorption device 3. Reservoir R2 contains the adsorbent A with the lowest load of carbon dioxide. Reservoir R2 is being flushed with initial flushing fluid FI. The medium loaded flushing fluid FM leaving reservoir R2 is being fed into reservoir R3. The high loaded flushing fluid FH leaving reservoir R3, which is also the final flushing fluid FF, is being transported into the target 16.

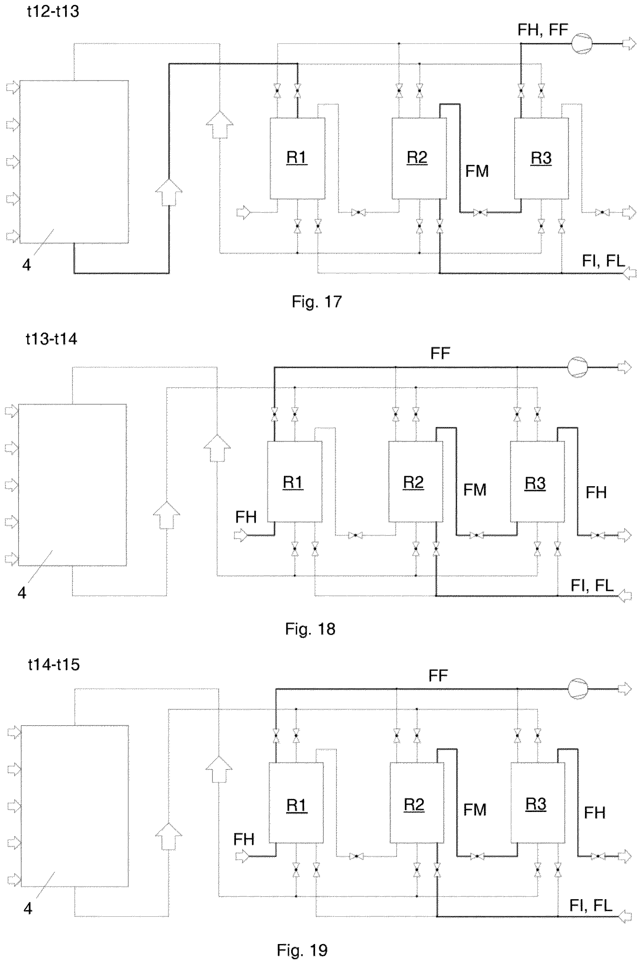

In Fig. 17 representing time interval t12-t13, reservoir R1 is being filled with a batch of adsorbent A. Reservoir R2 still containing the adsorbent A with the lowest load of carbon dioxide is being flushed with initial flushing fluid FI. Reservoir R3 is being flushed with the medium loaded flushing fluid FM leaving reservoir R2 and the final flushing fluid FF is being removed from reservoir R3.

In Fig. 18 representing time interval t13-t14, reservoir R2 still is being flushed with the initial flushing fluid FI. Reservoir R3 containing the adsorbent A with medium load of carbon dioxide is being flushed with the medium loaded flushing fluid FM leaving reservoir R2. Reservoir R1 containing the adsorbent A with the highest load of carbon dioxide is being flushed with the high loaded flushing fluid FH leaving reservoir R3. The final flushing fluid FF is being removed from reservoir R1.

In Fig. 19 representing time interval t14-t15, the processing as shown in Fig. 18 is going on.

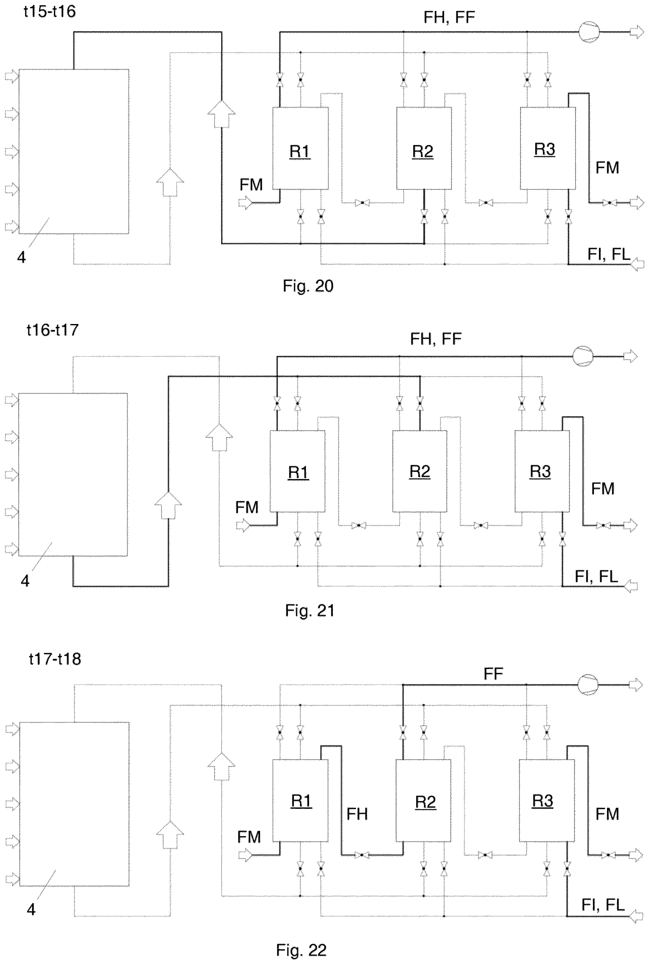

In Fig. 20 representing time interval t15-t16, the adsorbent A in reservoir R2 has been regenerated and this adsorbent A is being fed back into the adsorption device 3. Reservoir R3 contains the adsorbent A with the lowest load of carbon dioxide. Reservoir R3 is being flushed with the initial flushing fluid FI. The medium loaded flushing fluid FM leaving reservoir R3 is being fed into reservoir R1. The high loaded flushing fluid FH leaving reservoir R1, which is also the final flushing fluid FF, is being transported into the target 16.

In Fig. 21 representing time interval t16-t17, reservoir R2 is being filled with a batch of adsorbent A. Reservoir R3 still containing the adsorbent A with the lowest load of carbon dioxide is being flushed with initial flushing fluid FI. Reservoir R1 is being flushed with the medium loaded flushing fluid FM leaving reservoir R3 and the final flushing fluid FF is being removed from reservoir R1.

In Fig. 22 representing time interval t17-t18, reservoir R3 still is being flushed with initial flushing fluid FI. Reservoir R1 containing the adsorbent A with medium load of carbon dioxide is being flushed with the medium loaded flushing fluid FM leaving reservoir R3. Reservoir R2 containing the adsorbent A with the highest load of carbon dioxide is being flushed with the high loaded flushing fluid FH leaving reservoir R1. The final flushing fluid FF is being removed from reservoir R2.

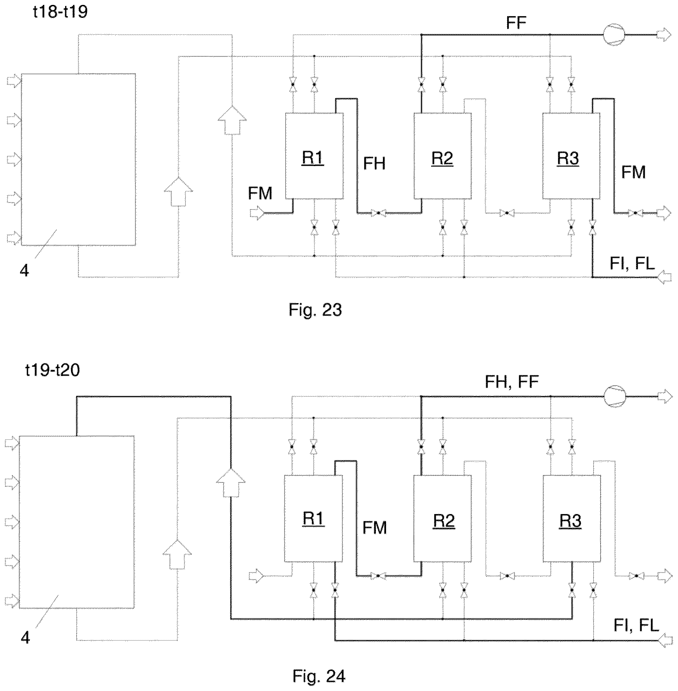

In Fig. 23 representing time interval t18-t19, the processing as shown in Fig. 22 is going on.

In Fig. 24 representing time interval t19-t20, the adsorbent A in reservoir R3 has been regenerated and this adsorbent A is being fed back into the adsorption device 3. Reservoir R1 contains the adsorbent A with the lowest load of carbon dioxide. Reservoir R1 is being flushed with initial flushing fluid FI. The medium loaded flushing fluid FM leaving reservoir R1 is being fed into reservoir R2. The high loaded flushing fluid FH leaving reservoir R2, which is also the final flushing fluid FF, is being transported into the target 16.

## Claims

1. Method for capturing carbon dioxide from a carbon dioxide laden gas stream (S), comprising at least the following steps:
a1) introducing the carbon dioxide laden gas stream (S) into at least one container (4) of an adsorption device (3) containing an adsorbent (A) made of solid adsorbent particles for binding the carbon dioxide to the adsorbent (A) and
a2) holding the adsorbent (A) in the container (4), thereby adsorbing carbon dioxide from the gas stream (S) on the adsorbent (A) contained in the container (4);
b) feeding the adsorbent (A) loaded with carbon dioxide into a regeneration device (2);
c) regenerating the adsorbent (A) in the regeneration device (2) by separating the carbon dioxide bound to the adsorbent (A) from the adsorbent (A);
d) removing both the carbon dioxide separated from the adsorbent (A) and the regenerated adsorbent (A) from the regeneration device (2);
e) recirculating the regenerated adsorbent (A) into the adsorption device (3);
**characterized in that**
the feeding of the adsorbent (A) loaded with carbon dioxide into the regeneration device (2) comprises
b1) sequentially feeding batches of the adsorbent (A) loaded with carbon dioxide into at least two reservoirs (R) of the regeneration device (2), and
b2) for each reservoir (R), starting regeneration of the adsorbent (A) in the reservoir (R) that was last filled with adsorbent (A) before feeding a batch of adsorbent (A) into the next reservoir (R) of the sequence, thereby providing the batches of the adsorbent (A) in the reservoirs (R) with different concentrations of carbon dioxide at each point in time;
wherein removing the regenerated adsorbent (A) in step d) comprises sequentially removing the regenerated batches of the adsorbent (A) from one reservoir (R) after the other of the at least two reservoirs (R);
wherein regenerating the adsorbent (A) in step c) comprises
c1) flushing the reservoir (R) currently containing the adsorbent (A) loaded with the least concentration of carbon dioxide with flushing fluid (F) which is an initial flushing fluid (FI) essentially free of carbon dioxide, thereby adding an amount of carbon dioxide to the initial flushing fluid (FI) in the reservoir (R) during regeneration, and
c2) flushing each other reservoir (R) containing the adsorbent (A) loaded with more than the least concentration of carbon dioxide with flushing fluid (F) which is a pre-used flushing fluid (FP) comprising the initial flushing fluid (FI) and the added carbon dioxide, which pre-used flushing fluid (FP) is passed on from the reservoir (R) containing the adsorbent (A) loaded with the next lower concentration of carbon dioxide; and
wherein removing the carbon dioxide in step d) comprises
removing carbon dioxide separated from the adsorbent (A) in the reservoir (R) containing the adsorbent (A) loaded with the highest concentration of carbon dioxide and
the carbon dioxide passed on from the other reservoirs (R) into the reservoir (R) containing the adsorbent (A) loaded with the highest concentration of carbon dioxide
from the reservoir (R) containing the adsorbent (A) loaded with the highest concentration of carbon dioxide.

2. Method according to claim 1, **characterized by**:
at least for a time period required for feeding batches of the adsorbent (A) into the same reservoir (R) at least three times, feeding the batches of the adsorbent (A) into the reservoirs (R) in step b1) in sequence and separated by a first time interval, which is constant, in particular which is defined as the time between consecutive feeding of two batches into the same reservoir (R) divided by the number of reservoirs (R).

3. Method according to claim 1 or 2, **characterized by**:
at least for a time period required for removing the regenerated batches of the adsorbent (A) from the same reservoir (R) at least three times, removing the regenerated batches of the adsorbent (A) from the reservoirs (R) in sequence and separated by the first time interval, which is constant, in particular which is defined as the time between consecutive feeding of two batches into the same reservoir (R) divided by the number of reservoirs (R).

4. Method according to any one of claims 1 to 3, **characterized by**:
flushing all reservoirs (R) with the flushing fluid (F) for the same duration of time.

5. Method according to any one of claims 1 to 4, **characterized by**:
heating the batches of the adsorbent (A) loaded with carbon dioxide within the reservoirs (R), in particular by the flushing fluid (F).

6. Method according to any one of claims 1 to 5, **characterized by**:
the flushing fluid (F) having a temperature of 60 to 120 Celsius degree.

7. Method according to any one of claims 1 to 6, **characterized by**:
the initial flushing fluid (FI) being steam or a purging gas.

8. Method according to any one of claims 1 to 7, **characterized by**:
in at least one reservoir (R) measuring the concentration of separated carbon dioxide and flushing the reservoir (R) until the concentration of separated carbon dioxide reaches a defined value.

9. A plant (1) for capturing carbon dioxide from a carbon dioxide laden gas stream (S), comprising:
an adsorption device (3) with at least one container (4) for containing an adsorbent (A) made of solid adsorbent particles for binding the carbon dioxide to the adsorbent (A), the adsorption device (3) having an adsorbent inlet (5) and an adsorbent outlet (6),
a regeneration device (2) for separating the bound carbon dioxide from the adsorbent (A), connected to the adsorption device (3),
**characterized by**
the regeneration device (2) comprising at least two reservoirs (R) connected to each other, each reservoir (R) having an adsorbent intake (7), an adsorbent outtake (8), a fluid intake (9), a fluid outtake (10), and is connected to a first intake valve (11), a first outtake valve (12), a second intake valve (13), a second outtake valve (14) and a third intake valve (15); wherein
the adsorbent outlet (6) of the adsorption device (3) is connected to the adsorbent intake (7) of each reservoir (R) via the first intake valve (11) assigned to each reservoir (R),
the adsorbent outtake (8) of each reservoir (R) is connected to the adsorbent inlet (5) of the adsorption device (3) via the first outtake valve (12) assigned to each reservoir (R),
the fluid intake (9) of each reservoir (R) is connected to a source of initial flushing fluid (FI) essentially free of carbon dioxide via the second intake valve (13) assigned to each reservoir (R), and the fluid intake (9) is furthermore connected to the fluid outtake (10) of a respective downstream reservoir (R) via the third intake valve (15) assigned to each reservoir (R),
the fluid outtake (10) of each reservoir (R) is connected to a target (16) for carbon dioxide via the second outtake valve (14) assigned to each reservoir (R), wherein a vacuum generation unit (17) configured to generate a vacuum inside each reservoir (R) is arranged between the second outtake valves (14) and the target (16 for carbon dioxide, and furthermore the fluid outtake (10) of each reservoir (R) is connected to the fluid intake (9) of a respective upstream reservoir (R) via the third intake valve (15) assigned to each reservoir (R), and
a controller (18) connected to and at least configured to open and close the first intake valves (11), the first outtake valves (12), the second intake valves (13), the second outtake valves (14) and the third intake valves (15).

10. The plant (1) according to claim 9, **characterized in that** the initial flushing fluid (FI) is steam or a purging gas and in particular the flushing fluid (F) comprises a temperature of between 60 and 120 Celsius degree.

11. The plant (1) according to claim 9 or 10, **characterized in that** the absolute pressure in the reservoirs (R) comprises between 0,15 and 0,8 bara.
